# EUROPEAN PATENT APPLICATION

(11) **EP 4 760 377 A1**
(43) Date of publication of application: **17.06.2026**
(21) Application number: 25221928.2
(22) Date of filing: 09.12.2025
(51) Int. Cl.: G02F 1/01

(54) **INTEGRATED PHOTONICS DEVICE, CORRESPONDING CIRCUIT AND METHOD**

(30) Priority: 10.12.2024 IT 202400027978
(71) Applicant: STMicroelectronics International N.V., 1228 Plan-les-Ouates, Geneva (CH)
(72) Inventor: FINCATO, Antonio, I-28062 Cameri (Novara) (IT)
(74) Representative: Buzzi, Notaro & Antonielli d'Oulx S.p.A.

(57) **Abstract**

An integrated photonics device (100), such as a thermal phase shifter, for instance, comprises:
a substrate of integrated photonics material having an optical waveguide (110) extending therealong as well as first (112a) and second (112b) lateral strips extending sidewise of the optical waveguide (110) and thermally coupled therewith;
first (115a) and second (115b) heat transfer formations, such as arrays of copper pillars, configured to transfer heat from a proximal end distanced away from the first lateral strip (112a) and the second lateral strip (112b) in the substrate of integrated photonics material towards a distal end thermally coupled to the first lateral strip (112a) and the second lateral strip (112b) in the substrate of integrated photonics material; and
first (130a) and second (130b) electric heaters thermally coupled with the proximal ends of the first (115a) and second (115b) heat transfer formations.
Heat generated by the first (130a) and second (130b) electric heaters is transferred to the optical waveguide (110) via the first (115a) and second (115b) heat transfer formations and the first (112a) and second (112b) lateral strips in the substrate of integrated photonics material.

## Description

### Technical field

The present disclosure relates to integrated photonics.

Solutions as described herein can be applied in the technology currently referred to as silicon photonics.

Solutions as described herein can be applied to thermal phase shifting in optical waveguides in integrated photonic circuits.

### Technological background

Integrated photonics is an emerging branch of photonics in which waveguides and devices are fabricated as an integrated structure onto the surface of a flat substrate (flat surface). Complex integrated photonic circuits can process and transmit light in similar ways to how electronic integrated circuits process and transmit electronic signals.

The technology currently referred to as silicon photonics has emerged as a critical technology for highspeed optical communications, optical computing, and integrated optical signal processing. Phase shifters represent an important component in these systems, enabling critical functions such as beam steering, wavelength routing, and signal modulation.

Phase shifter architectures attracting research and development activities encompass thermal phase shifters and electrical phase shifters, with distinct advantages and limitations.

Thermal phase shifters leverage temperature-induced changes in material refractive index to modify optical path lengths. Thermal phase shifters can adjust optical signal characteristics by applying localized heating through integrated resistive elements. Compatibility with standard silicon manufacturing processes and relatively low complexity, make thermal phase shifters an advantageous choice among the existing solutions.

Electrical phase shifters exploit electro-optic effects to modify optical paths through applied electric fields, for instance by directly manipulating refractive indexes or waveguide geometries. Electrical phase shifters facilitate generating rapid phase shifts, which may entail material compatibility issues and insertion losses in silicon photonic platforms.

Thermal phase shifters demonstrate good integration potential within standard silicon manufacturing processes, offer uniform and predictable phase shifts, and provide remarkable flexibility in design optimization.

The inherent material compatibility of thermal approaches, combined with their ability to achieve precise phase modulation through straightforward heating mechanisms, makes thermal phase shifters advantageous for advanced silicon photonics applications, particularly in scenarios demanding high reproducibility, scalable manufacturing, and consistent optical performance across diverse operational environments.

Recent developments of thermal phase shifters for silicon photonics were found to lie at basis of energy consumption challenges that may constrain photonic circuit performance. Common thermal phase shifting mechanisms may involve considerable electrical power in generating thermal gradients for optical path length modulation.

The amount of energy involved in operation may adversely affect the overall circuit efficiency and also introduce thermal management complexity that can militate against accurate optical signal control.

Existing solutions that attempt at reducing power consumption may face challenges related to integration within standard silicon photonics fabrication processes.

In fact, various power reduction techniques may involve specialized manufacturing steps or materials likely to increase production complexity and device cost. Such approaches often depart from established process flows, and may face technical and economic barriers to implementation.

Documents such as, for instance, US 2022/113564 A1, US 2019/004342 A1, US 2005/169566 A1, US 2018/143462 A1, US 2022/197064 A1, US 2019/124724 A1, and US 8 461 589 B1 are exemplary of prior activity in this area.

### Object and summary

An object of solutions as described herein is to contribute in addressing the issues discussed in the foregoing.

Such an object can be achieved via an integrated photonics device having the features set forth in the claims that follow.

Solutions as described herein also relate to a corresponding (integrated) circuit. An integrated photonic thermal phase shifter may be exemplary of such a circuit.

Solutions as described herein also relate to a corresponding method.

The claims are an integral part of the disclosure of solutions as described herein.

### Brief description of the drawings

Solutions according to the present disclosure will now be described with reference to the annexed drawings, which are provided purely by way of non-limiting example and wherein:
Figures 1A and 1B show a thermal phase shifter comprising a rib waveguide;
Figures 2A and 2B show a thermal phase shifter comprising a strip waveguide;
Figures 3A and 3B show a thermal phase shifter comprising a strip waveguide and a trench;
Figure 4 is a plan view of a thermal phase shifter in accordance with solutions proposed herein;
Figure 5A is a cross-sectional view along line A-A' in Figure 4;
Figure 5B is a cross-sectional view along line B-B' in Figure 4;
Figure 6 is a flowchart of a method for manufacturing a device in accordance with solutions proposed herein;
Figure 7 shows a three-dimensional view of a device in accordance with solutions proposed herein;
Figure 8 shows an exemplary photonic integrated circuit comprising thermal phase shifters realized in accordance with solutions proposed herein; and
Figure 9 shows a further example of photonic integrated circuit comprising a thermal phase shifter realized in accordance with solutions proposed herein.

### Detailed description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

Throughout the figures annexed herein, unless the context indicates otherwise, like parts or elements are indicated with like references/numerals and a corresponding description will not be repeated for the sake of brevity.

Also, for the sake of simplicity and ease of explanation, a same designation may be applied throughout this description to designate:
a certain node or line as well as a signal occurring at that node or line, and/or
a certain component (such as a capacitor or a resistor) as well as electrical parameter thereof (capacitance or resistance/impedance, for instance).

When it is mentioned in the following that an element is "connected to" or "coupled to" (optically or electrically) another element, it should be understood that still another element may be interposed therebetween, as well as that the element may be connected or coupled directly to another element. On the contrary, when it is mentioned that an element is "connected directly to" or "coupled directly to" (optically or electrically) another element, it should be understood that still another element is not interposed therebetween.

Throughout this description, the designation "silicon photonics" may be used to indicate the technology currently referred to with that designation in so far as silicon was and still is advantageously the integrated photonics material used "par excellence" in most applications based on that technology.

However, referring for brevity to "silicon photonics" (or to a "silicon photonics material") shall not be construed as implying, even indirectly, that the solutions as described herein are strictly limited to the use of silicon as the base material of integrated photonics devices and circuits as proposed herein.

Other integrated photonics materials suited to be used in solutions as proposed herein are indicated, by way of possible examples, in TABLE 1, at page 633 of R. J. Deri and E. Kapon: "Low-loss III-V semiconductor optical waveguides", IEEE J. Quantum Electron., vol. 27, no. 3, pp. 626-640, March 1991.

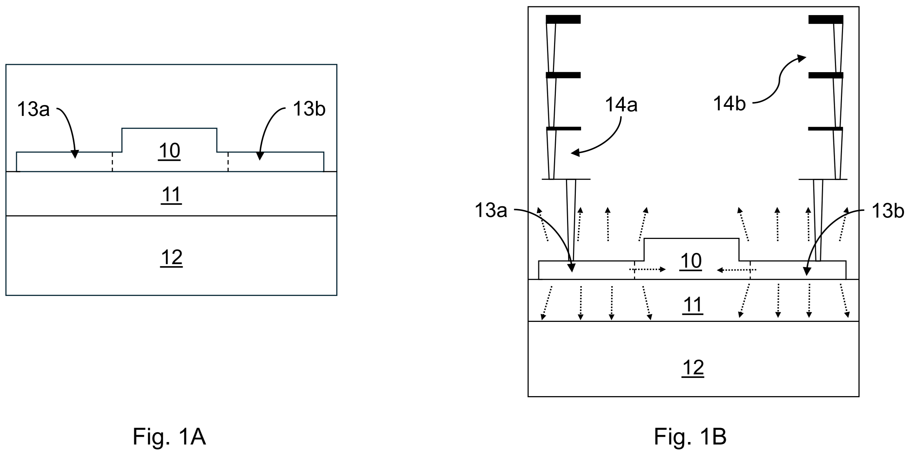

Figure 1A is illustrative of a sectional view of a thermal phase shifting solution applied to a waveguide 10.

As illustrated, the waveguide 10 lies on a buried oxide layer 11, which is obtained on top of a silicon substrate 12.

In order to perform thermal phase shifting, the waveguide 10 comprises a first heater 13a and a second heater 13b at the outer sides of the waveguide 10 and extending along the while length of the waveguide 10.

The heaters 13a and 13b can be obtained by heavily doping, either with electron donor or electron acceptor dopants, the portions of the waveguide 10 where the heaters 13a and 13b are to be provided.

As illustrated in Figure 1B, the first heater 13a and the second heater 13b receive electric energy from a first metal via 14a and a second metal via 14b in ohmic contact therewith: when bias is applied through the vias 14a and 14b, current flows through the heaters 13a and 13b, thus generating heat.

In such an example the heaters 13a and 13b are positioned (too) close to the silicon substrate 12. As indicated by the arrows, only a small fraction of the generated heat is transmitted to the waveguide 10, and a large fraction of heat is dispersed in the silicon substrate 12, thus rendering such solution poor under the aspect of energy efficiency.

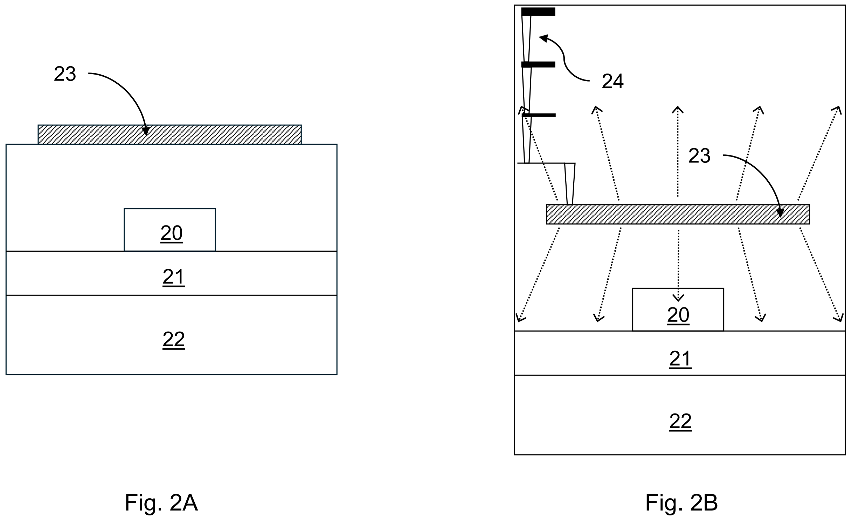

Figure 2A illustrates a further exemplary solution.

There, a thermal phase shifting is applied to a strip waveguide 20. As illustrated, the strip waveguide 20 lies on a buried oxide layer 21, which is obtained on top of a silicon substrate 22.

In order to perform thermal phase shifting, a metal heater 23 is provided above the strip waveguide 20, with a metal via 24 providing electric energy to the metal heater 23, as illustrated in Figure 2B.

Also this solution suffers more or less from the same problems discussed in the foregoing. As indicated by the arrows in Figure 2B, the metal heater 23 heats a large volume of the oxide layer 21. This leads to poor power efficiency due to the fact that a large amount of heat shall be delivered in order to achieve a desired phase shift.

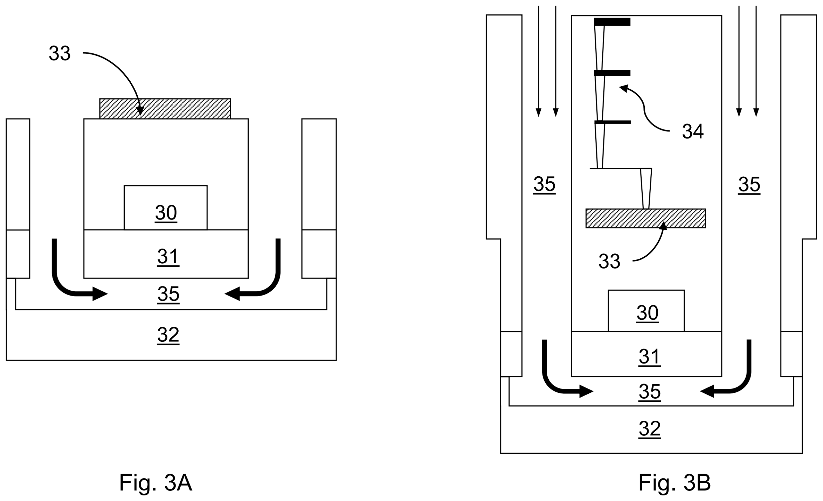

Figure 3A is illustrative of a further exemplary solution for performing thermal phase shifting exhibiting a higher power efficiency.

As illustrated, a strip waveguide 30 is provided on top of a buried oxide layer 31. A trench 35 surrounds the under-cladding i.e., the buried oxide layer 31, and an over-cladding 31b comprising the strip waveguide 30, in such a way that the trench 35 is filled with air. The trench 35 has a lower side wall laying on top of a silicon substrate 32, whereas lateral side walls are in contact with the over-cladding 31b.

As illustrated in Figure 3B, a metal heater 33 is provided on top of the over-cladding 31b, with a metal via 34 being provided in order to supply electrical energy to the metal heater 33.

Such a solution may achieve higher power efficiency in so far as the air filling the trench 35 facilitates thermal insulation of the strip waveguide 30 from the silicon substrate 32.

Process steps to realize trenches and undercuts typically involve high-anisotropy etching procedures which may be challenging and expensive to implement in a silicon photonics manufacturing process.

A somewhat similar solution is disclosed in document US 2022/113564 A1 (already cited), wherein an integrated chip including a waveguide and a heater structure is presented.

In such a solution, the waveguide is disposed on a substrate and comprises an active region that extends continuously along a first distance. The heater structure overlies the waveguide, and comprises a conductive structure over the active region and a vertical structure disposed between the conductive structure and the substrate. The vertical structure comprises a conductive upper vertical segment and a lower vertical segment.

The conductive structure and the conductive upper vertical segment continuously laterally extend across a second distance that is greater than or equal to the first distance, the first distance being greater than a width of the conductive structure.

Thermal phase shifting solutions capable of overcoming the aforementioned problems are thus desirable that facilitate performing thermal phase shifting in photonic integrated circuits.

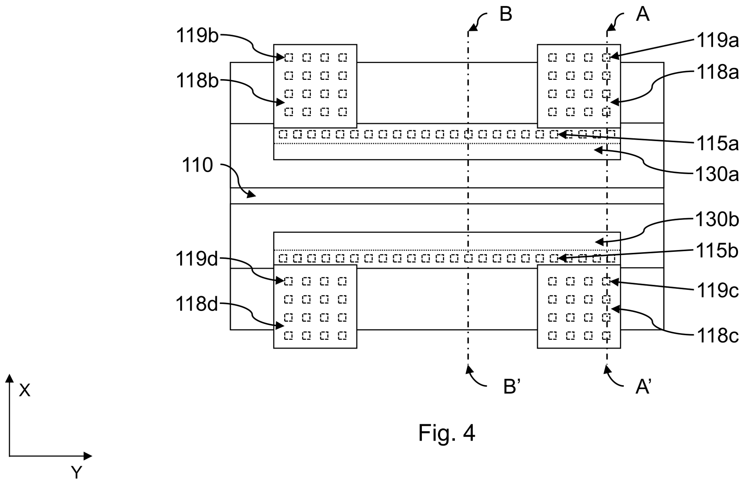

Figure 4 is a plan view a thermal phase shifter 100 realized in accordance with solutions as proposed herein.

As illustrated, the thermal phase shifter 100 comprises a silicon waveguide 110 extending along a first horizontal direction Y on top of a silicon dioxide layer 106 forming a lower cladding of the waveguide 110.

Further, the thermal phase shifter 100 comprises a pair of heaters 130a and 130b, respectively provided at the left and right side of the waveguide 110.

As used herein, "left" and "right" refer to a second horizontal direction X, transverse the "longitudinal" direction Y of the substrate, namely the directions of the waveguide 100 and the heaters 130a and 130b.

The ends of the heaters 130a and 130b are provided with metallic contacts 118a, 118b, 118dc, and 118d.

As illustrated, the first heater 130a has a first metallic contact 118a at one end and a second metallic contact 118b at the other end.

Similarly, the second heater 130b has a third metallic contact 118c at one end and a fourth metallic contact 118d at the end.

A pair of trenches (not visible for simplicity) may be provided for enhancing thermal insulation of the silicon substrate from the heat generated by the heaters 130a and 130b.

In various solutions, the heaters 130a and 130b are electrically coupled to the metallic contacts 118a, 118b, 118c, and 118d by means of metal vias arrays 119a and 119b.

To summarize:
a device 100 as proposed herein comprises an elongated substrate of integrated photonics material (see the introductory portion of this description in respect of that designation) having an optical waveguide 110 extending along the substrate as well as first and second lateral strips 112a, 112b extending sidewise of the optical waveguide 110 and thermally coupled therewith;
first and second heat transfer formations 115a, 115b (arrays of pillars, for instance) are provided configured to transfer heat from a proximal end thereof, distanced away from the first and second lateral strips 112a, 112b in the substrate of integrated photonics material towards a distal end that is thermally coupled to the first lateral strip 112a and the second lateral strip 112b in the substrate of integrated photonics material;
first and second electric heaters 130a, 130b are thermally coupled with the proximal ends of the first and second heat transfer formations 115a, 115b; and
the optical waveguide 110 is thermally coupled with the electric heaters 130a,130b via the heat transfer formations 115a, 115b and the lateral strips 112a, 112b in the substrate of integrated photonics material.

In that way, heat generated by the electric heaters 130a, 130b is transferred to the optical waveguide 110 via:
the first and second heat transfer formations 115a, 115b, and
the first and second lateral strips 112a, 112b in the substrate of integrated photonics material.

More in detail, in Figure 4 a first section line A-A' and a second section line B-B' are shown with the first section line A-A' extending through the metal contacts 118a and 118c, the metal vias 119a and 119c, the heaters 130a and 130b, and the rib waveguide 110, and the second section line B-B' extending through the heaters 130a and 130b, and the waveguide 110.

Both section lines A-A' and B-B' extend along the second horizontal direction X.

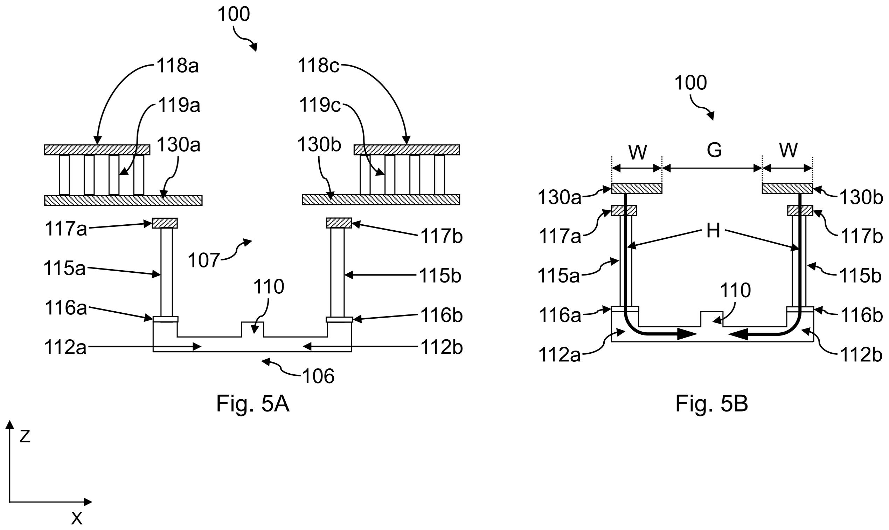

Figure 5A is illustrative of a cross-sectional view of the thermal phase shifter 100 in correspondence of the first section line A-A'.

As illustrated, the silicon waveguide 110 is provided on top of a silicon dioxide lower cladding 106. In addition to the silicon waveguide 110, the thermal phase shifter 100 comprises the first silicon strip 112a and the second silicon strip 112b, positioned sidewise of waveguide 110, possibly slightly protruding (upwards, in a "vertical" direction Z) at the leftmost and rightmost ends of the substrate.

There, arrays of metal (copper, for instance) pillars 115a and 115b are provided. These metal pillars 115a and 115b provide first and second heat transfer formations extend along the axis Z (thus transverse to the plane of the substrate as identified by the directions X and Y) and are optionally bonded to the silicon strips 112a and 112b by means of silicide layers 116a and 116b.

In various solutions, the silicide layers 116a and 116b comprise nickel silicide.

The upper portion of each metal pillar 115a and 115b is bonded to metal pads 117a and 117b. The metal pads 117a and 117b have a cross-section larger than the cross-section of the metal pillars 116a and 116b (that is, are enlarged head portions of the pillars 116a and 116b).

The metal pads 117a and 117b are separated from the heaters 130a and 130b by a gap.

In that way, the heaters 130a and 130b can conduct heat through the gap to the metal pads 117a and 117b, which in turn conduct heat to the metal pillars 115a and 115b below. In various solutions, the gap is filled by oxide, for example silicon dioxide, which may be bonded to an upper cladding 107 of the silicon waveguide 110.

It is noted that insulating the gap with silicon dioxide (SiO₂) is advantageous but not strictly mandatory. In principle even an air gap is feasible, but such a choice may end up by being unreliable due to the small distance between two conductors which should not come into contact with each other.

The heaters 130a and 130b are electrically coupled to the metal contacts 118a and 118b by means of the metal vias 119a and 119b.

With reference Figure 4, the electrical contacts 118a, 118b, 118c, and 118d are provided in such a way that a biasing voltage can be applied to the heaters 130a and 130b along the first horizontal direction Y.

Figure 5B is illustrative of a cross-sectional view of the thermal phase shifter 100 along line B-B'.

As illustrated, the second section line B-B' does not cross any metal contact, such as the metal contacts 118a and 118c, but only crosses the heaters 130a and 130b, a metal pillar of the array of metal pillars 115a, a metal pillar of the opposite array of metal pillars 118b, and the silicon waveguide 110.

As noted, the metal pads 117a and 117b are separated from the heaters 130a and 130b by relatively short gap, which allows the heaters 130a and 130b to transfer heat to the metal pads 117a and 117b.

With such an arrangement, the heaters 130a and 130b form two electrical resistances, having a first terminal respectively provided at the metal contacts 118a and 118c, and a second terminal respectively provided at the metal contacts 118b and 118d. In such a way, the heaters 130a and 130b generate heat when traversed by a current.

It is noted that the materials employed for realizing the structure as described herein are advantageous in so far as they can be used easily within a standard silicon photonics manufacturing process.

In fact, the materials involved include titanium nitride (TiN) used for realizing the heaters 130a and 130b, nickel silicide (NiSi) used for bonding the metal pillars 115a and 115b to the silicon strips 112a and 112b, and copper for realizing the metal pillars 115a and 115b, the metal pads 117a and 117b, the metal contacts 118a, 118b, 118c, and 118d and the metal vias 119a and 119b.

Alternatives to the solutions described herein are possible by adopting different materials.

In this regard, such a design may be advantageous in so far as the metal pillars 115a and 115b are exploited for conducting primarily heat and not electricity, a wide range of materials can be employed for bonding the metal pillars 115a and 115b to the respective silicon ribs 112a and 112b, without any need to ensure carrier transport across the silicon/silicide junction.

As illustrated in Figure 5B by the arrows H representing heat flow (by irradiation and/or conduction), the heat produced at the heaters 130a and 130b flows through the gap, the metal pads 117a and 117b, and the metal pillars 115a and 115b to the silicon waveguide 110, while advantageously reducing the heat transmitted to other portions of the thermal phase shifter 100 where heat does not play any role as desired and may even be detrimental.

In fact, heat is efficiently transferred to the waveguide 110 thanks to the higher thermal conductivity of the metal pads 117a and 117b with respect to the silicon dioxide forming the under-cladding 106 and the over-cladding 107.

As noted, the over-cladding 107 can be possibly made in silicon dioxide and covers the waveguide 110. Further, in various solutions the over-cladding 107 may incorporate one or more components of the thermal phase shifter 100 such as, for instance, the metal pillar arrays 115a and 115b, the metal pads 117a and 117b, and the heaters 130a and 130b.

To summarize, as exemplified herein, the first and second heat transfer formations 115a, 115b include an array of thermally conductive pillars having:
a proximal end distanced away from the first lateral strip 112a and the second lateral strip 112b in the substrate of integrated photonics material; and
a distal end thermally coupled to the first lateral strip 112a and the second lateral strip 112b in the substrate of integrated photonics material.

As exemplified herein, the first and second heat transfer formations 115a, 115b comprise electrically conductive material (optionally copper) arranged in the absence of contact (that is, at a distance) between:
the first and second (130b) electric heaters (130a, 130b), and
the proximal ends of the first and second heat transfer formations (arrays of pillars 115a, 115b).

Advantageously, thermally conductive formations such as those indicated by the references 117a and 117b provide facilitated (non-contact or "contactless") heat transfer paths between the electric heaters 130a, 130b and the proximal ends of the pillars 115a, 115b.

These thermally conductive formations 117a, 117b advantageously include a same thermally conductive material (copper, for instance) as the first and second heat transfer formations (arrays of pillars 115a, 115b).

Still advantageously, power supply terminals 118a, 118b, 118c, 118d for the electric heaters 130a, 130b may be provided along with (arrays of) electrically conductive vias 119a, 119b, 119c, 119d that couple the power supply terminals 118a, 118b, 118c, 118d) to the electric heaters 130a, 130b.

As illustrated, the electric heaters 130a, 130b have an elongated shape between opposed ends and the electrically conductive vias 119a, 119b, 119c, 119d that couple these power supply terminals 118a, 118b, 118c, 118d to the electric heaters 130a, 130b are advantageously arranged (only) at the opposed ends of such an elongated shape, while the thermally conductive formations 117a, 117b are distributed over the (whole) length of that elongated shape.

This can be appreciated by comparing Figure 5A and Figure 5B, where an inner gap (referenced G in Figure 5B) between the heaters 130a, 130b is visible along with the width (referenced W in Figure 5B) of the heaters, which is larger at the ends (visible in Figure 5A) where the power supply terminals 118a, 118b, 118c, 118d are arranged.

As illustrated, heat transfer material (see references 116a, 116b), optionally comprising nickel silicide is interposed between the distal end of the first and second heat transfer formations (pillars 115a, 115b) and the first and second lateral strips 112a, 112b in the substrate of integrated photonics material.

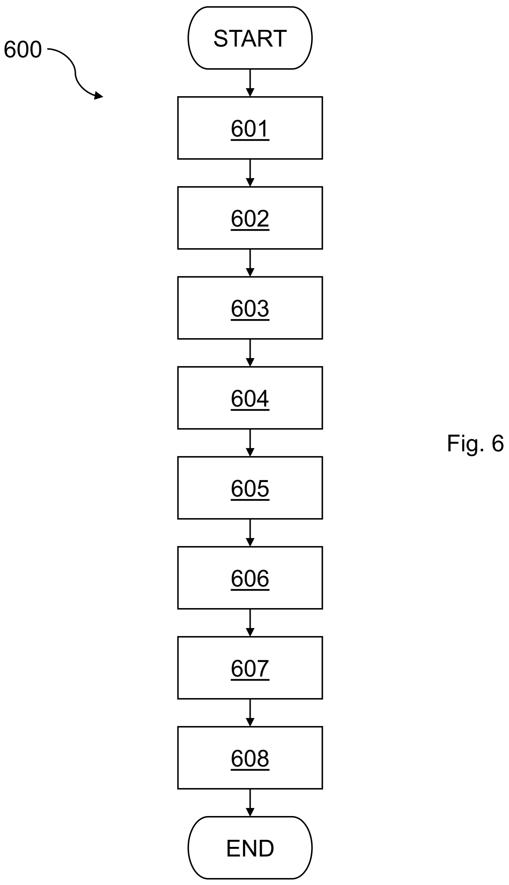

Figure 6 is a flowchart representing a method 600 for manufacturing a thermal phase shifter 100 as described in the foregoing.

After a starting step, wherein for instance a starting silicon-on-insulator substrate i.e., a silicon substrate comprising a buried silicon dioxide layer, is provided, in a first step 601 the silicon waveguide 110 is obtained by means of an etching process, along with the silicon ribs 112a and 112b, both the waveguide 110 and the silicon ribs 112a and 112b extending along the first horizontal direction Y.

In a step 602 the silicide bonding layers 116a and 116b are realized by means of a first intermediate step comprising deposition of nickel, or other metals, over the silicon ribs 112a and 112b, and a second intermediate step comprising thermal annealing in order to form the silicide bonding layers 116a and 116b through a silicidation reaction.

In a phase 603 the metal pillars 115a and 115b are fabricated on top of the respective silicide bonding layers 116a and 116b obtained in the previous step 602. As mentioned in the foregoing, the metal pillars 115a and 115b can be realized using copper, or other transition metals.

In a phase 604 the metal pads 117a and 117b are obtained on top of the metal pillars 115a and 115b. Also in this case, the metal pads 117a and 117b can be realized using copper, or other transition metals.

A step 605 comprises forming the heaters 130a and 130b on top of the metal pads 117a and 117b obtained previously. In particular, the heaters 130a and 130b are realized using titanium nitride while leaving a gap between the top of the metal pads 117a and 117b, and the bottom surface of the heaters 130a and 130b. In such a way, as described previously, the heat generated by the heaters 130a and 130b is transmitted by conduction to the metal pads 117a and 117b while reducing the undesired heating of other portions of the photonic integrated circuit. In particular, the heat generated is transferred through conduction across the material filling the gap, which can be silicon dioxide forming the upper cladding 107.

In a step 606 the metal vias 119a, 119b, 119c, and 119d are provided on top of the heaters 130a and 130b, in order to allow proper electrical biasing thereof. Similar to the metal pillars 115a and 115b, and to the metal pads 117a and 117b, the metal vias 119a, 119b, 119c, and 119d can be realized using copper or, alternatively, other transition metals.

In a step 607 the metal contacts 119a, 119b, 119c, and 119d are provided on top of the respective metal vias arrays 119a, 119b, 119c, and 119d for allowing electrical access to the heaters 130a and 130b. Also in this case, the metal contacts 119a, 119b, 119c, and 119d can be realized using copper or other transition metals.

In a step 608, a drilling step is performed for obtaining a first trench and a second trench at respective sides of the thermal phase shifter 100, in order to increase thermal insulation from the substrate. Such step of forming the trenches and is optional.

At the end of step 608, a finished thermal phase shifter 100 realized in accordance with solutions as described herein is obtained.

It will be otherwise appreciated that the sequence of steps of Figure 6 is merely exemplary insofar as:
one or more steps illustrated in Figure 6 can be omitted, performed in a different manner (with other tools, for instance) and/or replaced by other steps;
additional steps can be added, which are not mentioned for brevity: for instance, provision of metal layers and vias is preceded/followed by deposition of one or more oxides; and
one or more steps can be carried out in a sequence different from the sequence illustrated.

To summarize, a method as exemplified in the flowchart of Figure 6 comprises:
providing (see the step 601) an elongated substrate of integrated photonics material having an optical waveguide 110 extending therealong as well as first and second lateral strips 112a, 112b extending sidewise of the optical waveguide 110 and thermally coupled therewith;
growing (see the steps 602, 603, 604) first and second heat transfer formations (pillars 115a, 115b) configured to transfer heat from a proximal end distanced away from the first lateral strip 112a and the second lateral strip 112b in the substrate of integrated photonics material towards a distal end thermally coupled to the first lateral strip 112a and the second lateral strip 112b in the substrate of integrated photonics material; and
providing (see the steps 605, 606, 607) first and second electric heaters 130a, 130b that are thermally coupled with the proximal ends of the first 115a and second 115b heat transfer formations, wherein the optical waveguide 110 is thermally coupled with the first electric heater 130a and the second electric heater 130b via the first and second heat transfer formations (pillars 115a, 115b) and the first and second lateral strips 112a, 112b in the substrate of integrated photonics material.

Heat generated by the electric heaters 130a, 130b is thus transferred to the optical waveguide 110 via:
the first and second heat transfer formations (pillars 115a, 115b) and the first and second lateral strips 112a, 112b in the substrate of integrated photonics material.

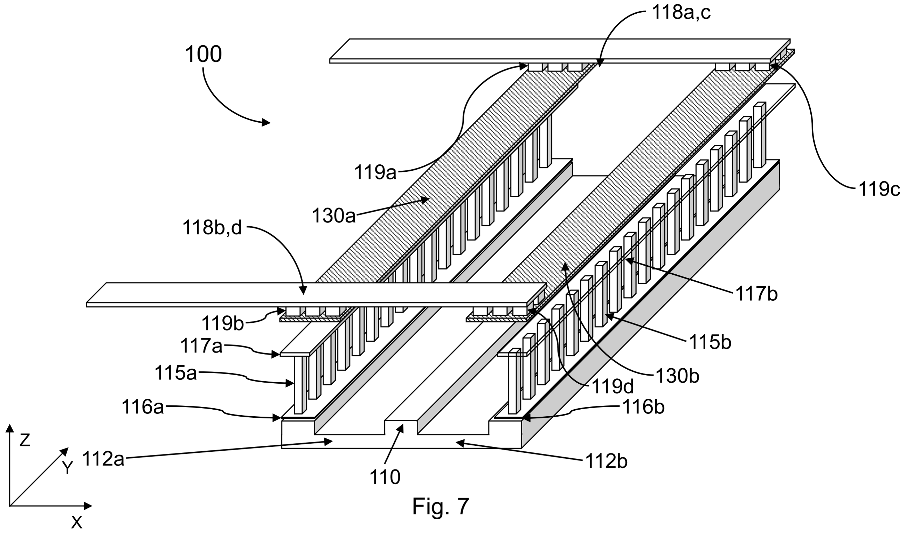

Figure 7 is a three-dimensional view of an integrated photonic device 100 that can be obtained as a result of the fabrication method 600.

In the example illustrated, the upper (with respect to the first direction Y) metal contacts 118a and 118c are obtained by means of a single metallic strip. The same applies to the lower, with respect to the first horizontal direction Y, metal contacts 118b and 118d. In such a way, the heaters 130a and 130c are susceptible to have the same applied voltage, with the same condition applying also to the lower metal contacts 118c and 118d, thus facilitating uniform heating of the heaters 130a and 130b.

Those of skill in the art may appreciate that fabrication steps as described in the foregoing are suited to be easily integrated in a silicon photonics fabrication process, without employing more complex steps such as high-anisotropy etching for performing undercuts.

In view of such advantages, a thermal phase shifter 100 as described herein may be employed in a wide range of photonic integrated circuits.

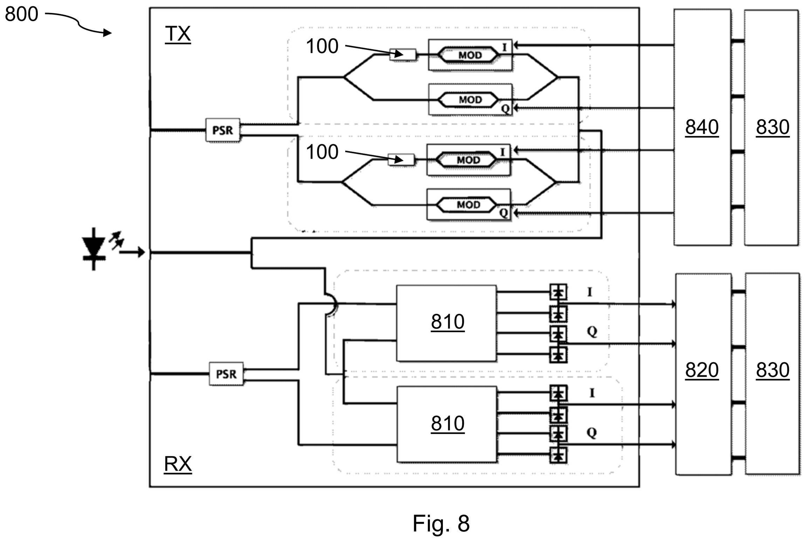

Figure 8 is illustrative of a first exemplary photonic integrated circuit 800 implementing a fully integrated photonic coherent transceiver. In the example shown, two thermal phase shifters 100 are optically coupled to a '1' symbol modulator circuit MOD, and are provided in portions respectively configured to support processing of x-polarized signals and y-polarized signals.

As illustrated, the transceiver 800 further comprises, in the receiver portion RX, two 90-degree hybrid circuits 810 respectively configured to support processing of x-polarized signals and y-polarized signals, which are electrically coupled through photodetectors to a transimpedance amplifier circuit 820, which is in turn coupled to a digital signal processor, DSP circuit 830.

Similarly, a DSP circuit 830 is provided in the transmitter portion TX, which is electrically coupled to a driver circuit 840. In turn, the driver circuit 840 is coupled to the modulator circuits MOD.

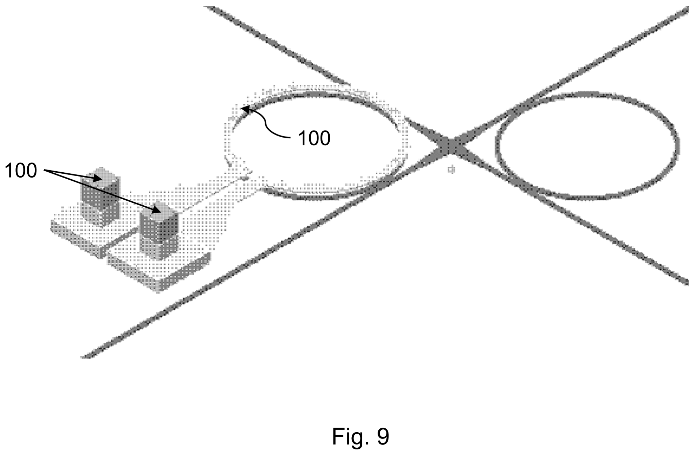

Figure 9 is illustrative of a second exemplary photonic integrated circuit implementing a thermal switch. In the example shown, the circuit comprises a thermal phase shifter 100, which in turn comprises a ring-shaped heating element and a similarly shaped waveguide. Also in this case, by applying the solution described herein to the circuit shown, advantages may comprise better power and thermal efficiency.

To summarize, both Figures 8 and 9 are exemplary of a circuit 800 comprising a device 100 as discussed previously, wherein an optical waveguide 110 in an integrated photonics material is configured to provide a path for optical radiation to propagate therealong.

Heat generated by the first and second electric heaters 130a, 130b and transferred to the optical waveguide 110 via the heat transfer formations (pillars 115a, 115b) and the lateral strips 112a, 112b in the substrate of integrated photonics material provides a phase shift as desired in the optical radiation propagating along the optical waveguide 110 in the integrated photonics material.

To summarize, solutions as described herein advantageously facilitate an increase in thermal and power efficiency in thermal phase shifter integrated photonic devices, while keeping an adequate complexity of the process, facilitating the use of existing available functionalities.

Solutions as proposed herein further facilitate cost effective implementations, which can be further exploited in addition to more complex, and costly, integrated photonic devices to further increase the efficiency of related photonic integrated circuits.

Without prejudice to the underlying principles, the details and embodiments may vary, even significantly, with respect to what has been described by way of example only, without departing from the extent of protection.

The extent of protection is determined by the annexed claims.

## Claims

1. A device (100), comprising:
a substrate of integrated photonics material having an optical waveguide (110) extending therealong as well as first (112a) and second (112b) lateral strips extending sidewise of the optical waveguide (110) and thermally coupled therewith;
first (115a) and second (115b) heat transfer formations configured to transfer heat from a proximal end distanced away from the first lateral strip (112a) and the second lateral strip (112b) in the substrate of integrated photonics material towards a distal end thermally coupled to the first lateral strip (112a) and the second lateral strip (112b) in the substrate of integrated photonics material; and
first (130a) and second (130b) electric heaters thermally coupled with the proximal ends of the first (115a) and second (115b) heat transfer formations, wherein said optical waveguide (110) is thermally coupled with the first (130a) and second (130b) electric heaters via said first (115a) and second (115b) heat transfer formations and said first (112a) and second (112b) lateral strips in the substrate of integrated photonics material.

2. The device (100) of claim 1, wherein the first (115a) and second (115b) heat transfer formations include an array of thermally conductive pillars having a proximal end distanced away from the first lateral strip (112a) and the second lateral strip (112b) in the substrate of integrated photonics material and a distal end thermally coupled to the first lateral strip (112a) and the second lateral strip (112b) in the substrate of integrated photonics material.

3. The device (100) of claim 1 or claim 2, wherein the first (115a) and second (115b) heat transfer formations comprise electrically conductive material, preferably copper, arranged in the absence of contact between the proximal ends of the first (115a) and second (115b) heat transfer formations and said first (130a) and second (130b) electric heaters.

4. The device (100) of any of the previous claims, wherein the first (115a) and second (115b) heat transfer formations comprise thermally conductive formations (117a, 117b) providing facilitated heat transfer paths between said first (130a) and second (130b) electric heaters and the proximal ends of the first (115a) and second (115b) heat transfer formations, the thermally conductive formations (117a, 117b) preferably including a same thermally conductive material as the first (115a) and second (115b) heat transfer formations.

5. The device (100) of any of the previous claims, comprising power supply terminals (118a, 118b, 118c, 118d) for said first (130a) and second (130b) electric heaters, as well as electrically conductive vias (119a, 119b, 119c, 119d) coupling said power supply terminals (118a, 118b, 118c, 118d) to said first (130a) and second (130b) electric heaters.

6. The device (100) of claim 4 and claim 5, wherein:
the first (130a) and second (130b) electric heaters have an elongated shape between opposed ends;
the electrically conductive vias (119a, 119b, 119c, 119d) coupling said power supply terminals (118a, 118b, 118c, 118d) to said first (130a) and second (130b) electric heaters are arranged at said opposed ends of said elongated shape; and
said thermally conductive formations (117a, 117b) are distributed over the length of said elongated shape between said opposed ends.

7. The device (100) of any of the previous claims, comprising heat transfer material (116a, 116b) interposed between the distal end of the first (115a) and second (115b) heat transfer formations and the first lateral strip (112a) and the second lateral strip (112b) in the substrate of integrated photonics material, wherein said heat transfer material (116a, 116b) preferably comprises nickel silicide.

8. A circuit (800), comprising a device (100) according to any of the preceding claims, wherein said optical waveguide (110) in said integrated photonics material is configured to provide a path for optical radiation to propagate therealong, wherein heat generated by the first (130a) and second (130b) electric heaters and transferred to the optical waveguide (110) via said first (115a) and second (115b) heat transfer formations and said first (112a) and second (112b) lateral strips in the substrate of integrated photonics material provides a phase shift in the optical radiation propagating along said optical waveguide (110) in said integrated photonics material.

9. A method, comprising:
providing (601) a substrate of integrated photonics material having an optical waveguide (110) extending therealong as well as first (112a) and second (112b) lateral strips extending sidewise of the optical waveguide (110) and thermally coupled therewith;
growing (602, 603, 604) first (115a) and second (115b) heat transfer formations configured to transfer heat from a proximal end distanced away from the first lateral strip (112a) and the second lateral strip (112b) in the substrate of integrated photonics material towards a distal end thermally coupled to the first lateral strip (112a) and the second lateral strip (112b) in the substrate of integrated photonics material; and
providing (605, 606, 607) first (130a) and second (130b) electric heaters thermally coupled with the proximal ends of the first (115a) and second (115b) heat transfer formations, wherein said optical waveguide (110) is thermally coupled with the first (130a) and second (130b) electric heaters via said first (115a) and second (115b) heat transfer formations and said first (112a) and second (112b) lateral strips in the substrate of integrated photonics material.
